# EUROPÄISCHE PATENTANMELDUNG

(11) **EP 1 022 545 A1**
(43) Veröffentlichungstag der Anmeldung: **26.07.2000**
(21) Anmeldenummer: 00101053.7
(22) Anmeldetag: 20.01.2000
(51) Int. Cl.: G01D 5/249, G01B 7/30

(54) **Drehgeber**

(30) Priorität: 25.01.1999 DE 19902739
(71) Anmelder: Schleicher, Wolfgang Dipl.-Ing., 78052 VS-MARBACH (DE)
(72) Erfinder: Schleicher, Wolfgang Dipl.-Ing., 78052 VS-MARBACH (DE)
(74) Vertreter: Weiss, Peter, Dr.

(57) **Zusammenfassung**

Bei einem Drehgeber zur Ermittlung der Drehbewegung einer Welle (2) mittels einem mechanischen und/oder elektronischen Zählwerk (4), soll zwischen der Welle (2) und dem Zählwerk (4) ein Planetengetriebe (3) angeordnet sein.

## Beschreibung

Die Erfindung betrifft einen Drehgeber zur Ermittlung der Drehbewegung einer Welle mittels einem mechanischen und/oder elektronischen Zählwerk.

Drehgeber oder Winkelcodierer sind Messeinrichtungen für Steuerungssysteme, in denen Winkelverschiebungen oder in solche umgewandelte Linearverschiebungen zu messen sind. Gegenüber bekannten Inkrementalgebern haben sie den entscheidenden Vorteil, dass jede Winkelposition der Verstellwelle vom mehrspurigen Teilungsmuster einer Codescheibe abgelesen wird und als absoluter Wert in Form einer eindeutigen Signalkombination ausgegeben wird. Nach Verstellen im stromlosen Zustand und Wiedereinschalten der Stromversorgung steht der richtige Messwert sofort zur Verfügung.

Die vorliegende Erfindung bezieht sich vor allen Dingen auf mehrstufige Winkelcodierer (Multiturn). Um Verstellungen über mehr als eine Umdrehung absolut messen zu können, werden mehrer Codescheiben benötigt, die über Getriebe mit der ersten Scheibe verbunden sind. Mit einer Scheibe von 1.024 Schritten, 3 Getriebestufen mit 16:1 und 3 Scheiben mit je 16 Schritten, lassen sich somit 4.096 Umdrehungen in 4.194.304 Schritte auflösen, die immer als absolute Information zur Verfügung stehen.

Die Umwandlung der Gray-codierten Information in die von der nachfolgenden Anzeige-, Rechner- oder Steuereinheit benötigten Codierung erfolgt elektronisch.

Der vorliegenden Erfindung liegt die Aufgabe zugrunde, für derartige Drehgeber bzw. Winkelcodierer ein einfaches Getriebe zwischen Welle und Zählwerk zur Verfügung zu stellen.

Zur Lösung dieser Aufgabe führt, dass zwischen der Welle und dem Zählwerk ein Planetengetriebe angeordnet ist.

Bevorzugt ist das Planetengetriebe als reduziertes Planetengetriebe bzw. Wolfrom-Planetengetriebe aufgebaut. Es weist zumindest zwei achsenparallel angeordnete Aussenzahnkränze und darin zumindest zwei achsenparallel angeordnete Innenzahnkränze auf, zwischen denen Planetenräder angeordnet sind. Aussenzahnkränze und Innenzahnkränze sind bevorzugt auf entsprechenden Scheiben, Ringen od. dgl. angeordnet.

Damit eine getriebemässige Übersetzung erfolgen kann, weisen die beiden Getriebehälften, jeweils aus einem Aussenzahnkranz, einem Innenzahnkranz und den entsprechenden Planetenrädern eine unterschiedliche Anzahl an Zähnen auf, die je nach Wunsch für die Übersetzung ausgewählt werden können.

In einem Ausführungsbeispiel der vorliegenden Erfindung ist ein Aussenzahnkranz drehfest in einem Gehäuse festgelegt. Ein Innenkranz sitzt drehfest der Welle auf, während mit dem anderen Aussenzahnkranz bzw. einem entsprechenden Trägerring eine Codescheibe verbunden ist, die in das Zählwerk eingreift.

Das vorliegende Planetengetriebe ist insbesondere für die eben genannte Winkelcodierung, aber auch für andere mechanisch, induktiv oder elektronisch-optisch arbeitende Drehgeber anwendbar.

Denkbar ist auch die Anwendung für einen Resolver bzw. einen RVDT (Rotations-Variabler-Differential-Travo). Diese werden mit einer Trägerfrequenz gespeist. Ein rotativer Kern oder Rotor beeinflusst auf Empfängerspulen das Koppelverhältnis je nach Winkelstand zu diesen Empfängerspulen. Die Empfängerspulen müssen zwei sein. Eine Spule für die Erzeugung eines Sinus und eine Spule für die Erzeugung eines Kosinus. Die in diese Spulen transformierte Spannung wird von der Trägerfrequenz getrennt, so dass auf den Signalspuren eine Analogspannung erhalten wird, deren Amplitude von der Rotorstellung abhängt. Bei Drehung des Rotors um 360° wird an der Signalspur ein Sinusdurchlauf dieser Analogspannung erhalten. Um 90° phasenverschoben erhält man an der Signalspur 2 den Kosinus.

Die Auswertung dieser Signalspuren ermöglicht es, durch Interpolation dieser Signale eine Absolutstellung des Rotors zu messen. Die Auflösung dieses Absolutwertes hängt von dem Interpolationsgrad ab. Ebenfalls zeigen die Sinalspuren die Drehrichtung des Rotors an. Ein mit dem Wolfrom-Getriebe gebauter Multiturngeber auf induktiver Basis erlaubt eine einfache Übersetzungsfestlegung des Getriebes. Das Übersetzungsverhältnis braucht nur ganzzahlig zu sein. Die Anzahl der mechanischen Umdrehungen werden elektronisch per Interpolation dem Multiturnbereich angepasst.

### Beispiel:

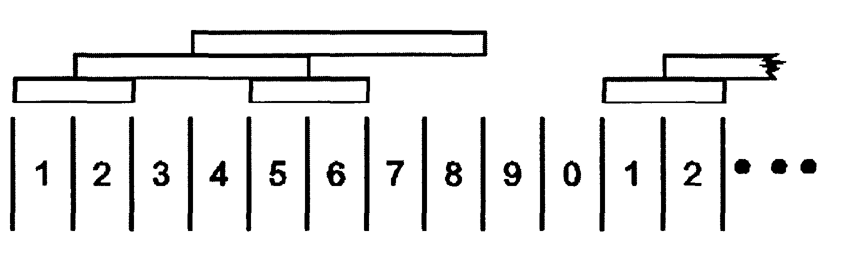

### Code einschrittig ohne binär ganzzahlig.

Der Drehgeber kann auch als Hohlwellengeber ausgestaltet sein, wobei er dort den Vorteil hat, erheblich platzsparend ausgelegt werden zu können. Aus einer Hohlwellenausführung kann auch eine Wellenausführung gemacht werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Querschnitt durch einen erfindungsgemässen Drehgeber;
Figur 2 eine perspektivische Ansicht eines erfindungsgemässen Planetengetriebes zur Verwendung in dem Drehgeber gemäss Figur 1.

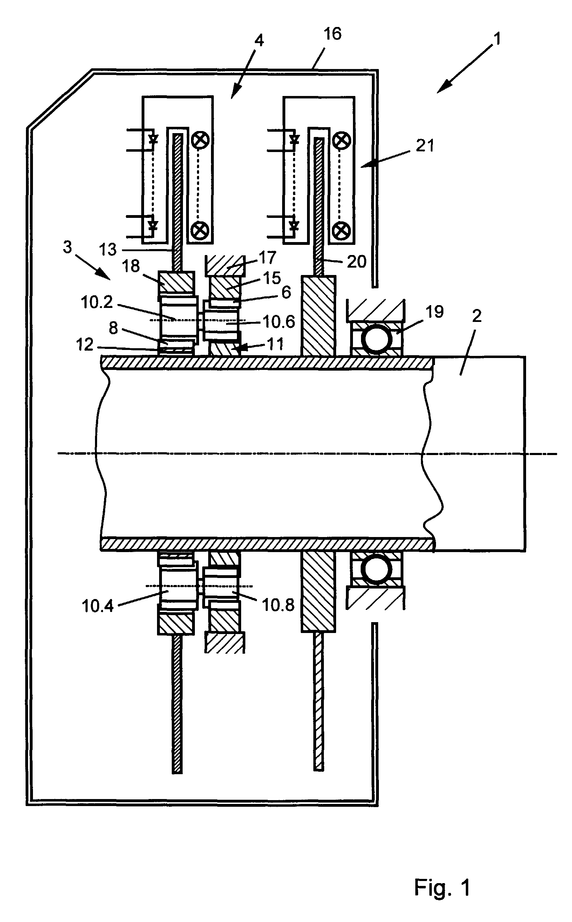

Ein Drehgeber 1 sitzt gemäss Figur 1 auf einer Welle 2 auf. Hierbei ist die Welle 2 mit einem Planetengetriebe 3 verbunden, das wiederum einem Zählwerk 4 zugeordnet ist.

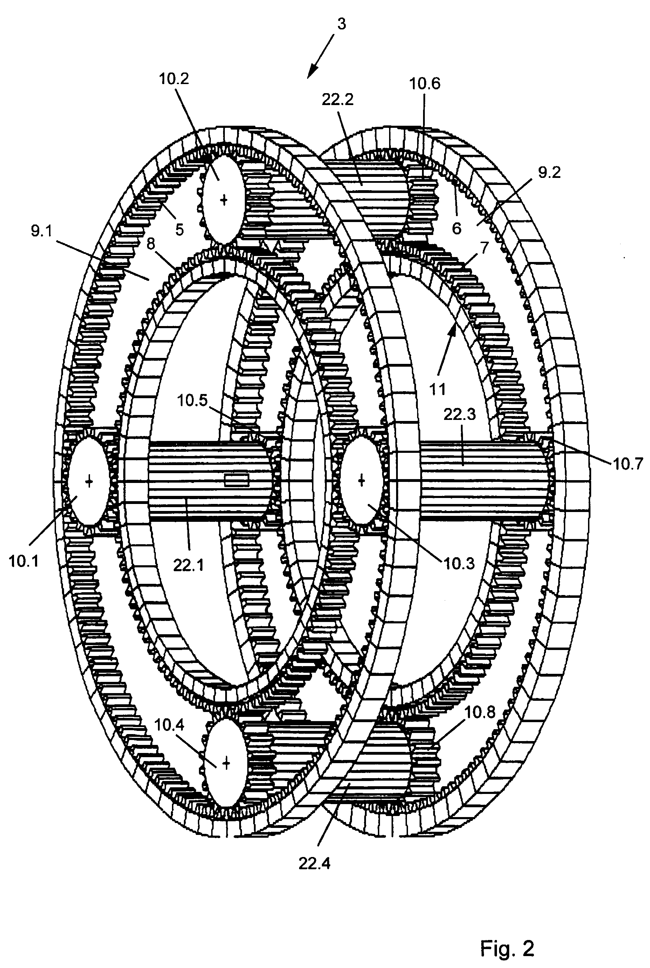

Gemäss Figur 2 weist das Planetengetriebe 3 zwei Aussenzahnkränzen 5 und 6 auf, welche achsparallel zueinander angeordnet sind. In den Aussenzahnkränzen 5 und 6 sitzen zwei Innenzahnkränze 7 und 8, die zusammen mit den Aussenzahnkränzen 5 und 6 jeweils einen Ringraum 9.1, 9.2 für Planetenräder 10.1 bis 10.8 ausbilden. Jeweils zwei Planetenräder 10.1 und 10.5, 10.2 und 10.6, 10.3 und 10.7 bzw. 10.4 und 10.8 sind über ein Verbindungsstück 22.1 bis 22.4 miteinander gekoppelt.

In dem in Figur 1 gezeigten Ausführungsbeispiel sitzt ein Zahnrad 11 mit dem Zahnkranz 7 der Welle 2 auf und ist mit dieser drehfest verbunden. Ein dem Zahnrad 11 zugeordnetes Aussenzahnrad 15, welches den Aussenzahnkranz 6 aufweist, ist ortsfest in einem Gehäuse 16 des Drehgebers gelagert, was durch einen Gehäusering 17 angedeutet ist.

Neben dem Zahnrad 11 befindet sich ein weiteres Zahnrad 12 mit dem Innenzahnkranz 8, wobei dieses Zahnrad 12 mit Spiel um die Welle 2 angeordnet ist. Dieses Zahnrad 12 wird wiederum von einem Aussenzahnrad 18 umfangen, welches den Aussenzahnkranz 5 aufweist. Diesem Aussenzahnrad 18 ist eine Codescheibe 13 aufgesetzt, die in das Zählwerk 4 eingreift.

Im übrigen ist die Welle 2 in ein Lager 19 in dem Gehäuse 16 gelagert. Zwischen Lager 19 und dem Planetengetriebe 3 ist noch eine weitere Codescheibe 20 vorgesehen, welche direkt mit der Welle 2 verbunden ist. Auch diese Codescheibe 20 greift in ein weiteres Zählwerk 21 ein.

Die Funktionsweise der vorliegenden Erfindung ist folgende:

Die Planetenräder 10.5 bis 10.8 werden in Drehrichtung der Welle 2 im Raum 9.2 mitbewegt. Dabei ist die Drehrichtung der Planetenräder zum Innenzahnrad gegensinnig.

Die starr verbundenen Planetenräder 10.1 bis 10.4 bewegen sich im Ringraum 9.1. Durch konstruktive Festlegung ist die Radiusbahn der Planetenräder 10.1 bis 10.4 die gleichen wie die der Planetenräder 10.5 bis 10.8.

Die Drehrichtung der Planetenräder 10.1 bis 10.4 ist gleich der Drehrichtung der Planetenräder 10.5 bis 10.8, d.h., gegensinnig zum Innenzahnrad 8.

Die Zähneanzahl der ersten Getriebehälfte, die durch das Zahnrad 11, das Zahnrad 15 und die Planetenräder 10.5 bis 10.8 gebildet wird, ist um mindestens einen Zahn grösser als diejenigen der zweiten Getriebehälfte, die durch die Zahnräder 12 und 8 sowie die Planetenräder 10.1 bis 10.4 gebildet wird. Durch diesen Zähnezahlunterschied wird das Aussenzahnrad 18 in Drehrichtung zum Innenzahnrad 11 gedreht. Das Innenzahnrad 12 dreht in gleicher Drehrichtung wie das Innenzahnrad 11, jedoch um den Betrag der Übersetzung langsamer. Im übrigen hat das Innenzahnrad 12 auf die Funktion des Getriebes keinen Einfluss. Es ist lediglich aus konstruktiven Gründen zur mechanischen Stabilität des Getriebes vorgesehen.

Die eben beschriebene Getriebefunktion ist lediglich eine Funktionsvariante. Selbstverständlich sind auch andere Übersetzungsfunktionen möglich. Beispielsweise kann das Innenzahnrad 12 angetrieben und das Aussenzahnrad 18 drehfest gehalten werden. Der Abtrieb erfolgt dann über das Aussenzahnrad 15. Ferner kann das Innenzahnrad 12 als Eingangszahnrad benutzt werden, das Aussenzahnrad 15 als gehäusefeste Verbindung und das Aussenzahnrad 18 als Abtriebszahnrad.

In allen Fällen ist bei gleichen Zahnzahlkombinationen die abgehende Drehrichtung nicht unbedingt gleich der Drehrichtung der eingehenden Drehrichtung. In allen Fällen ist auch bei gleichen Zahnzahlkombinationen die Übersetzung unterschiedlich.

Nachfolgend sind zwei Berechnungsbeispiele ausgeführt:

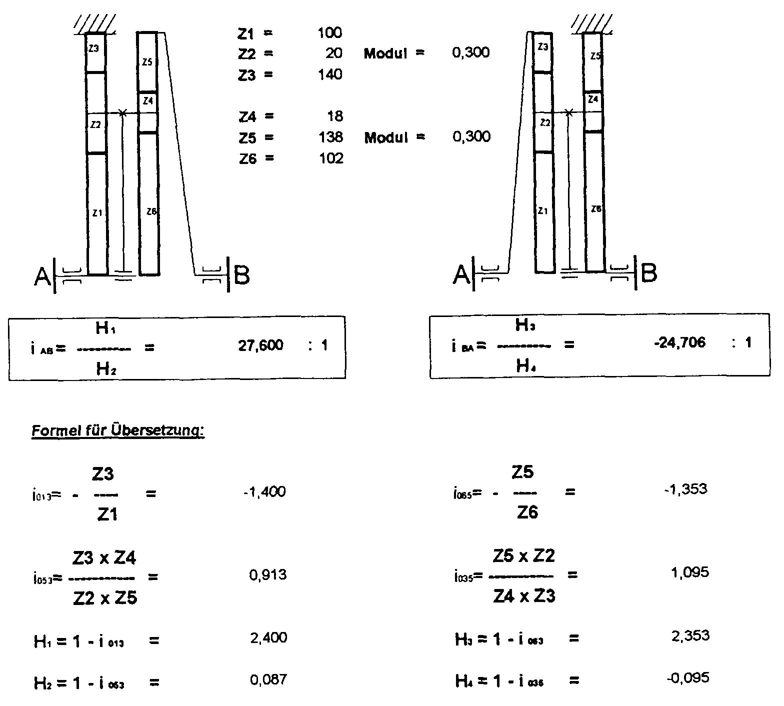

Die Getriebeübersetzung 27,6 : 1 soll näher für die Anwendung für ein Gray-Absolut-Encoder beschrieben werden. Um ganzzahlig mit diesem Getriebe einen Absolut-Encoder zu realisieren, werden die Umdrehungen auf 5 x 27,6 = 138 Umdrehungen ausgelöst. Nach 138 Umdrehungen sind somit genau 1.800° (5 x 360) durchlaufen. Dies ergib einen Winkel von 13.04347826.. bei einer Umdrehung an der Antriebsseite. Wird die Umdrehung der Antriebsseite mit einem einschrittigen Code (Gray) auf 1.024 Absolutwerte aufgelöst, ergeben sich 1.024 x 138 = 141312 Absolutstellungen. Auf dem Getriebeabgang ist ebenfalls eine Absolutscheibe mit 1.024 Werten angebracht. Durch Decodierung oder Vergleich mit einer Tabelle wird auf elektronischem Weg der Absolutwert des Multiturngebers ermittelt. Es ist gewährleistet, dass kein Winkelwert der abgehenden Welle mit dem Gray-Wert der ersten Welle doppelt vorhanden ist. Ebenso verhält es sich mit jeder weiter angebauten Getriebestufe.

Über die Welle 2 wird das Zahnrad 11 in Drehbewegung versetzt, während das Zahnrad 15 ortsfest bleibt. Die Drehbewegung wird über die Planetenräder 10.5 bis 10.8 auf die Planetenräder 10.1 bis 10.4 und von diesen auf das Zahnrad 12 und das Zahnrad 18 übertragen. Das Zahnrad 18 überträgt seine Drehbewegung auf die Scheibe 13, die von entsprechenden Elementen des Zählwerkes 4 abgegriffen wird.

Durch die Wahl einer unterschiedlichen Zahnung bei den Aussenzahnkränzen 5 und 6 bzw. den Innenzahnkränzen 7 und 8 und bei den Planetenrädern ist es möglich, die Drehung der Welle 2 im Zählwerk 4 in Werte umzusetzen.

| **Positionszahlenliste** | | | | | |
|---|---|---|---|---|---|
| 1 | Drehgeber | 34 | | 67 | |
| 2 | Welle | 35 | | 68 | |
| 3 | Planetengetriebe | 36 | | 69 | |
| 4 | Zählwerk | 37 | | 70 | |
| 5 | Aussenzahnkranz | 38 | | 71 | |
| 6 | Aussenzahnkranz | 39 | | 72 | |
| 7 | Innenzahnkranz | 40 | | 73 | |
| 8 | Innenzahnkranz | 41 | | 74 | |
| 9 | Ringraum | 42 | | 75 | |
| 10 | Planetenrad | 43 | | 76 | |
| 11 | Zahnrad | 44 | | 77 | |
| 12 | Zahnrad | 45 | | 78 | |
| 13 | Codescheibe | 46 | | 79 | |
| 14 | | 47 | | | |
| 15 | Aussenzahnrad | 48 | | | |
| 16 | Gehäuse | 49 | | | |
| 17 | Gehäusering | 50 | | | |
| 18 | Aussenzahnrad | 51 | | | |
| 19 | Lager | 52 | | | |
| 20 | Codescheibe | 53 | | | |
| 21 | Zählwerk | 54 | | | |
| 22 | Verbindungsstück | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Drehgeber zur Ermittlung der Drehbewegung einer Welle (2) mittels einem mechanischen und/oder elektronischen Zählwerk (4),
dadurch gekennzeichnet,
dass zwischen der Welle (2) und dem Zählwerk (4) ein Planetengetriebe (3) angeordnet ist.

2. Drehgeber nach Anspruch 1, dadurch gekennzeichnet, dass das Planetengetriebe (3) zumindest zwei achsparallel angeordnete Aussenzahnkränze (5 und 6) und darin zumindest zwei achsparallel angeordnete Innenzahnkränze (7 und 8) aufweist, zwischen denen miteinander verbundene Planetenräder (10.1 bis 10.8) angeordnet sind.

3. Drehgeber nach Anspruch 2, dadurch gekennzeichnet, dass eine Getriebehälfte aus einem Aussenzahnkranz (5 oder 6), einem Innenzahnkranz (7 oder 8) und entsprechenden Planetenräder (10.1-10.4 oder 10.5-10.8) gegenüber der anderen Getriebehälfte eine unterschiedliche Anzahl an Zähnen aufweist.

4. Drehgeber nach Anspruch 3, dadurch gekennzeichnet, dass ein Innenzahnkranz (7 oder 8) auf der Welle (2) und ein Aussenzahnkranz (5 oder 6) ortsfest festgelegt sind, während der andere Aussenzahnkranz (6 oder 5) mit dem Zählwerk (4) verbunden ist.

5. Drehgeber nach Anspruch 4, dadurch gekennzeichnet, dass einem Zahnkranz (5-8) des Planetengetriebes (3) eine Codescheibe (13) zugerodnet ist, welche in das Zählwerk (4) eingreift.
